**Europäisches Patentamt**

(19) **European Patent Office**

**Office européen des brevets**

(11) Veröffentlichungsnummer: **0 068 489**
**B1**

(12) # EUROPÄISCHE PATENTSCHRIFT

(45) Veröffentlichungstag der Patentschrift:
**24.10.84**

(51) Int. Cl.³: **H 01 R 35/00**

(21) Anmeldenummer: **82105746.0**

(22) Anmeldetag: **29.06.82**

(54) **Vorrichtung zum elektrischen Kontaktieren eines Stabs.**

(30) Priorität: **30.06.81 DE 3125773**

(43) Veröffentlichungstag der Anmeldung:
**05.01.83 Patentblatt 83/1**

(45) Bekanntmachung des Hinweises auf die Patenterteilung:
**24.10.84 Patentblatt 84/43**

(84) Benannte Vertragsstaaten:
**AT BE CH FR IT LI LU NL SE**

(56) Entgegenhaltungen:
**CH - A - 569 357**
**DE - B - 1 119 367**
**DE - B - 2 238 652**

(73) Patentinhaber: **ARCUS ELEKROTECHNIK Alois Schiffmann GmbH, Streitfeldstrasse 15, D-8000 München 80 (DE)**

(72) Erfinder: **Czernek, Georg, Peter Rosegger-Strasse 12, D-8905 Mering (DE)**

(74) Vertreter: **Reinländer & Bernhardt Patentanwälte, Orthstrasse 12, D-8000 München 60 (DE)**

## Beschreibung

Die Erfindung betrifft eine Vorrichtung zum elektrischen Kontaktieren eines Stabs nach dem Oberbegriff des Anspruchs 1.

Es gibt verschiedene Anwendungsfälle, bei denen zwischen elektrisch leitenden Teilen eine Verbindung hergestellt werden muss, die einen möglichst geringen Kontaktwiderstand aufweist, d.h. durch hohe Ströme belastbar ist. Wenn diese Verbindung zwischen relativ zueinander bewegbaren Teilen erfolgt, ist ein Gleitkontakt erforderlich, der üblicherweise durch elastische Kontaktelemente erfolgt. Solche gleitenden Kontakte haben meist nicht eine ausreichende Kontaktfläche und nicht den erforderlichen niedrigen Kontaktwiderstand, um hohe Ströme gefahrlos übertragen zu können.

Insbesondere beim Erden und Kurzschliessen von Hochspannungsleitungen treten solche hohen Ströme auf.

Bei einer bekannten Erdungsvorrichtung sind Kontaktelemente in Form von Federn oder von Ringkontaktzonen vorgesehen (DE-C Nr. 2238652). Wegen der geringen Kontaktfläche und des geringen Anpressdrucks der Kontaktelemente an die Erdungsstange ist bei dieser bekannten Vorrichtung eine gefahrlose Übertragung höchster Ströme nicht gewährleistet.

Der Erfindung liegt die Aufgabe zugrunde, eine Vorrichtung zum elektrischen Kontaktieren eines Stabs, der mit geringer Geschwindigkeit bewegbar ist, zu schaffen, die einen verbesserten Stromübergang aufweist.

Gelöst wird diese Aufgabe durch die Merkmale des Hauptanspruchs.

Weiterbildungen der Erfindung sind in den Unteransprüchen angegeben.

Unter geringer Geschwindigkeit wird hierbei verstanden, dass es sich nicht um dauernd schnell umlaufende Teile, wie bei einem Elektromotor, handelt, sondern dass der Stab nur fallweise relativ zu dem Gehäuse ein geringes Stück mit mässiger Geschwindigkeit bewegt wird. Die erfindungsgemässe Vorrichtung ist auch für sehr geringe Geschwindigkeiten brauchbar, wie sie beispielsweise bei Wärmedehnungen auftreten, weshalb die erfindungsgemässe Vorrichtung auch als Dehnungsausgleich verwendet werden kann.

Von dem Grad des Einführens bzw. Einschraubens des Druckstücks in das Gehäuse hängt der Kontaktdruck des Leiterbands auf den Stab ab. Ein gegebenenfalls im Laufe der Zeit auftretendes Nachgeben des Leiterbands kann durch die Tellerfedern und durch Nachstellen des Druckstücks ausgeglichen werden.

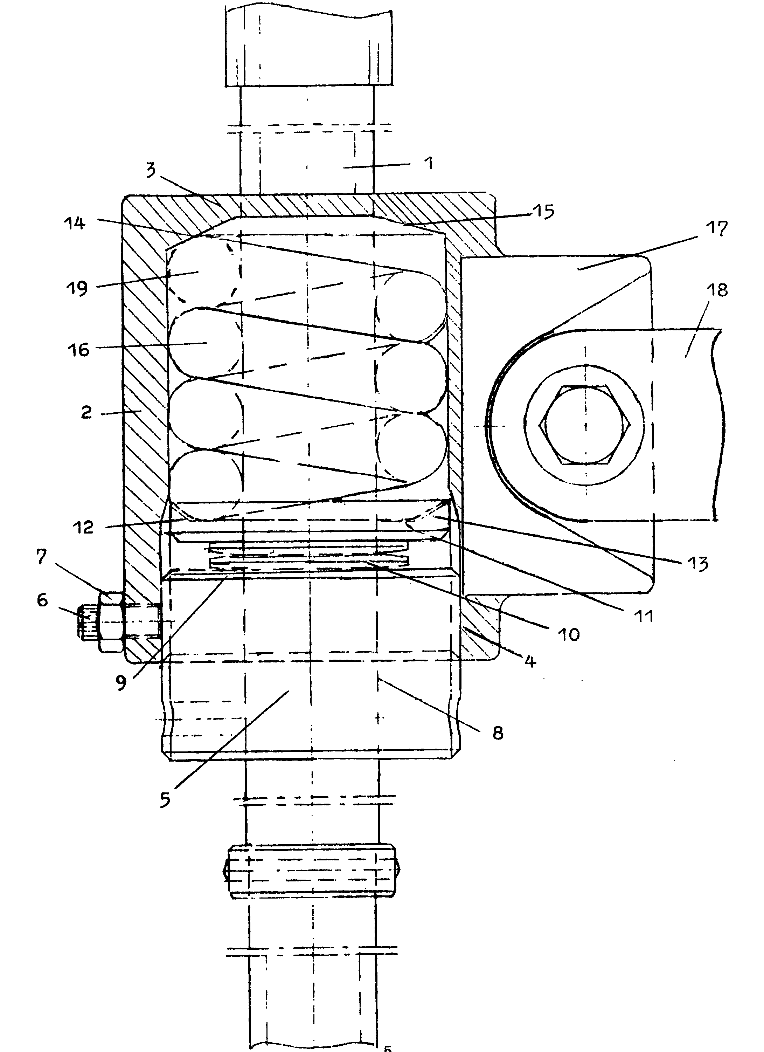

Die Erfindung wird beispielhaft anhand der Zeichnung beschrieben, die einen Schnitt durch eine erfindungsgemässe Vorrichtung zeigt.

Der zu kontaktierende Stab 1 aus leitfähigem Material ist durch ein topfartiges Gehäuse 2 gesteckt, indem er durch ein Loch in der einen abgeschlossenen Stirnseite 3 geführt ist. Die andere Stirnseite des Gehäuses 2 ist offen und mit einem Innengewinde 4 versehen, in das ein mit Aussengewinde versehenes Druckstück 5 eingeschraubt ist. Das Druckstück ist mittels eines radial eingeführten Schraubstifts 6 mit Kontermutter 7 in einer Winkelstellung arretierbar. Das Druckstück 5 weist ein Längsloch 8 auf, durch das der Stab 1 läuft. Vor der Stirnseite 9 des Druckstücks liegt ein Paket von über den Stab gesteckten Tellerfedern 10. Vor diesem Tellerfederpaket liegt eine Zwischenplatte 11. In dem Innenraum des Gehäuses, d.h. zwischen der Gehäusewand und dem Stab 1 liegt ein elastisches Leiterband in Form eines auf den Stab gewickelten Leiterseils 16. Die Zwischenplatte 11 ist an der Innenseite, also der dem Leiterband 16 zugewandten Seite, mit Schrägen 12 und 13 versehen. Die abgeschlossene Stirnseite 3 des Gehäuses ist innen ebenfalls mit Schrägen 14 und 15 versehen.

Die Zeichnung zeigt den Ausgangszustand der Vorrichtung. Zur Erreichung einer grossen Kontaktfläche und eines hohen Kontaktdrucks wird das Druckstück 5 in das Gehäuse 2 eingeschraubt, wodurch das Leiterseil 16 zusammengedrückt wird und alle freien Räume zwischen dem Stab und der Gehäusewand ausfüllt. Durch die Schrägen 12, 13, 14 und 15 wird darüber hinaus das Leiterseil auf den Stab zu gedrückt. Das Leiterseil legt sich damit grossflächig an den Stab 1 an, was zu einer intensiven Kontaktierung führt. An dem Gehäuse ist ein Stutzen 17 angebracht, an dem schwenkbar eine Lasche 18 angelenkt ist, die mit einem beliebigen Festpunkt verbunden ist.

Wenn die erfindungsgemässe Vorrichtung zum Kurzschliessen eines Hochspannungsleiters verwendet wird, in welchem Fall am oberen Ende des Stabs 1 eine (nicht gezeigte) Einrichtung zum Ansetzen an den Hochspannungsleiter vorgesehen ist, kann die Lasche 18 mit einem geerdeten Festpunkt eines Stützers verbunden sein. Ein eventueller Kurzschlussstrom fliesst damit vom Stab 1 über das Leiterseil 16, das Gehäuse 2, den Stutzen 17 und die Lasche 18 zur Erde. In diesem Fall müssen die Teile 2, 17 und 18 aus leitfähigem Material bestehen. Das Gehäuse 2 kann aber auch neben der abgeschlossenen Stirnseite 3 ein Loch 19 aufweisen, durch das das Ende des Leiterseils, das dann als Erdungsseil dient, aus dem Gehäuse herausgeführt und mit einem Erdungspunkt verbunden wird. In diesem Fall fliesst ein eventueller Kurzschlussstrom nur über das Erdungsseil 16, in welchem Fall die Teile 2, 17 und 18 aus nichtleitendem Material bestehen können.

## Patentansprüche

1. Vorrichtung zum elektrischen Kontaktieren eines Stabs (1), der mit geringer Geschwindigkeit bewegbar ist, mit einem rohrförmigen Gehäuse (2), durch das der Stab gesteckt ist, wobei das Gehäuse eine offene Stirnseite und eine bis auf ein Durchgangsloch für den Stab geschlossene Stirnseite (3) hat und wobei in dem Gehäuse elastische Kontaktelemente (16) vorgesehen sind, dadurch gekennzeichnet, dass als elastisches Kontaktelement ein den Raum zwischen der Innenwand des Gehäuses (2) und dem Stab (1) im wesentlichen ausfüllender flexibler Leiter (16) vorgesehen ist, der durch ein in der offenen Stirnseite des Gehäuses (2) angeordnetes Druckstück (5) zusammengepresst wird.

2. Vorrichtung nach Anspruch 1, dadurch gekennzeichnet, dass der flexible Leiter ein um den Stab (1) gewickeltes Leiterseil (16) ist.

3. Vorrichtung nach einem der Ansprüche 1 oder 2, dadurch gekennzeichnet, dass das Druckstück (5) in das Gehäuse (2) eingeschraubt (4) ist.

4. Vorrichtung nach einem der Ansprüche 1 bis 3, dadurch gekennzeichnet, dass die Innenseite der abgeschlossenen Stirnseite (3) des Gehäuses (2) mit Schrägen (14, 15) versehen ist.

5. Vorrichtung nach einem der Ansprüche 1 bis 4, dadurch gekennzeichnet, dass zwischen der vorderen Seite des Druckstücks (5) und dem flexiblen Leiter (16) Tellerfedern (10) liegen.

6. Vorrichtung nach Anspruch 5, dadurch gekennzeichnet, dass zwischen den Tellerfedern (10) und dem flexiblen Leiter (16) eine Zwischenplatte (11) liegt, deren dem flexiblen Leiter (16) zugewandte Seite mit Schrägen (12, 13) versehen ist.

7. Vorrichtung nach einem der Ansprüche 1 bis 6, dadurch gekennzeichnet, dass das Gehäuse (2) an einem Festpunkt eines Stützers schwenkbar und lösbar angeordnet ist und dass der Stab als Erdungsstange (1) am oberen Ende eine Einrichtung zum Ansetzen an einen zu erdenden Hochspannungsleiter aufweist.

8. Vorrichtung nach Anspruch 7, dadurch gekennzeichnet, dass das Gehäuse (2) neben der abgeschlossenen Stirnseite (3) ein Loch (19) aufweist und dass das eine Ende des um die Erdungsstange (1) gewickelten Leiterseils (16) durch das Loch zu einem Erdungspunkt geführt ist.

## Claims

1. Device for the electrical contacting of a rod (1) which can be moved with slow speed, having a tubular case (2) through which the rod is fitted, wherein the case has an open front side and a front side (3) closed except a through hole for the rod, and whereby elastic contact elements (16) are provided in the case, characterized in that a flexible conductor (16) essentially filling the space between the inside wall of the case (2) and the rod (1) is provided as the elastic contact element, which conductor is compressed by a pressure plate (5) arranged in the open front side of the case (2).

2. Device according to Claim 1, characterized in that the flexible conductor is a conducting rope (16) wound around the rod (1).

3. Device according to one of the Claims 1 or 2, characterized in that the pressure plate (5) is screwed (4) into the case (2).

4. Device according to one of the Claims 1 to 3, characterized in that the inside face of the closed front side (3) of the case (2) is provided with slopes (14, 15).

5. Device according to one of the Claims 1 to 4, characterized in that plate springs (10) are inserted between the front side of the pressure plate (5) and the flexible conductor (16).

6. Device according to Claim 5, characterized in that an intermediate plate (11) is inserted between the plate springs (10) and the flexible conductor (16), the side of the intermediate plate facing the flexible conductor (16) is provided with slopes (12, 13).

7. Device according to one of the Claims 1 to 6, characterized in that the case (2) is arranged pivotedly and detachably at a fixed point of a support, and that the rod, as a grounding rod (1), has at its upper end a means for applying it at a high-tension line to be grounded.

8. Device according to Claim 7, characterized in that the case (2) has a hole (19) adjacent to the closed front side (3), and that the one end of the conducting rope (16) wound around the grounding rod (1) is led through the hole to a grounding point.

## Revendications

1. Dispositif destiné à mettre en contact électrique une barre (1), laquelle est déplaçable avec une faible vitesse et, comprenant une enveloppe tubulaire (2), à travers laquelle passe la barre, l'enveloppe présentant un côté frontal ouvert et un côté frontal fermé (3), exception faite d'un trou de passage pour la barre, et des éléments de contact élastiques (16) étant prévus à l'intérieur de l'enveloppe, caractérisé en ce qu'il est prévu en tant qu'élément de contact élastique un conducteur flexible (16) qui, remplissant sensiblement l'espace entre la paroi intérieure de l'enveloppe (2) et la barre (1), est comprimé par un organe presseur (5) disposé dans le côté frontal ouvert de l'enveloppe (2).

2. Dispositif selon la revendication 1, caractérisé en ce que le conducteur flexible est un câble conducteur (16) enroulé autour de la barre (1).

3. Dispositif selon l'une des revendications 1 ou 2, caractérisé en ce que l'organe presseur (5) est vissé (4) dans l'enveloppe (2).

4. Dispositif selon l'une des revendications 1 à 3, caractérisé en ce que la paroi intérieure du côté frontal fermé (3) de l'enveloppe (2) présente des chanfreins (14, 15).

5. Dispositif selon l'une des revendications 1 à 4, caractérisé en ce qu'entre le côté antérieur de l'organe presseur (5) et le conducteur flexible (16) se trouvent des rondelles Belleville (10).

6. Dispositif selon la revendication 5, caractérisé en ce qu'entre les rondelles Belleville (10) et le conducteur flexible (16) s'étend une plaque intermédiaire (11) dont le côté tourné vers le conducteur flexible (16) présente des chanfreins (12, 13).

7. Dispositif selon l'une des revendications 1 à 6, caractérisé en ce que l'enveloppe (2) est montée, d'une manière amovible et de façon à pouvoir basculer, sur un point fixe d'un isolateur-support et en ce que la barre, en tant que barre de mise à la terre (1), présente à son extrémité supérieure un équipement pour sa fixation à une ligne à haute tension à mettre à la terre.

8. Dispositif selon la revendication 7, caractérisé en ce que l'enveloppe (2) présente à proximité du côté frontal fermé (3) un trou (19) et en ce que l'une des extrémités du câble conducteur (16) enroulé autour de la barre de mise à la terre (1) est guidée à travers le trou en direction d'un point de mise à la terre.

0 068 489